# EUROPEAN PATENT APPLICATION

(11) **EP 4 434 427 A1**
(43) Date of publication of application: **25.09.2024**
(21) Application number: 22882852.1
(22) Date of filing: 18.10.2022
(51) Int. Cl.: A47L 11/24, A47L 9/04, A47L 11/40

(54) **HAIR-CUTTING ROLLER BRUSH WITH REUSABLE DRIVE STRUCTURE, AND CLEANING DEVICE**

(30) Priority: 18.10.2021 CN 202122508036 U
(71) Applicant: Ningbo Fujia Industrial Co., Ltd., Ningbo, Zhejiang 315400 (CN)
(72) Inventor: FANG, Jianqiang, Ningbo, Zhejiang 315400 (CN); ZHENG, Jianming, Ningbo, Zhejiang 315400 (CN)
(74) Representative: Zaboliene, Reda
(86) International application number: PCT/CN2022/125920
(87) International publication number: WO 2023/066247

(57) **Abstract**

The present disclosure discloses a hair-cutting roller brush with a reusable drive structure, including a roller brush frame, a blade, and a rotating cylinder; the blade is arranged in the rotating cylinder, and while the rotating cylinder rotates, the rotating cylinder simultaneously drives the blade to reciprocate to cut hair through the drive structure; the roller brush frame has a first side and a second side; a part or all of the drive structure is arranged on the second side, and a sleeve hole is defined in the other end of the rotating cylinder being in axial sleeving connection with the part of the drive structure arranged on the second side; the axial sleeving connection is used to allow the other end of the rotating cylinder to be mounted on the second side in an axial direction; meanwhile one end of the rotating cylinder moves to be mounted on the first side along the axial direction with the axial sleeving connection; when the rotating cylinder is disassembled, the part of the drive structure arranged on the second side remains on the second side, and the rotating cylinder is disassembled in a direction opposite to the direction of the axial sleeving connection. The hair-cutting roller brush has a lower production cost. The present disclosure further discloses a cleaning device with the hair-cutting roller brush.

## Description

### TECHNICAL FIELD

The present disclosure relates to the technical field of cleaning roller brushes, and more particularly, to a hair-cutting roller brush with a reusable drive structure and a cleaning device.

### DESCRIPTION OF THE PRIOR ART

The Applicant has been deeply engaged in the technical field of cleaning. Through diligent research, the Applicant has pioneered a hair-cutting roller brush. A blade of the hair-cutting roller brush is arranged in a rotating cylinder of the roller brush. While the rotating cylinder rotates, a drive structure simultaneously drives the blade to reciprocate and cut hair, achieving the goal of efficiently cutting hair and other waste. For details, please refer to the Chinese invention patent with authorized announcement No. CN105982615B.

The Applicant has found that, during the production, operation, and research process, although the above solution is relatively clever and reliable, the drive structure is generally installed inside the hair-cutting roller brush to allow for the disassembly and assembly of the hair-cutting roller brush, which thus causes the discarding of the drive structure when the hair-cutting roller brush is replaced, resulting in a higher usage cost of the hair-cutting roller brush.

### SUMMARY OF THE DISCLOSURE

### TECHNICAL PROBLEM

The technical problem to be solved by the present disclosure is to overcome the defects of the prior art and provides a hair-cutting roller brush with a reusable drive structure, which is capable of reducing the cost of the hair-cutting roller brush. The present disclosure further provides a cleaning device with the hair-cutting roller brush.

### SOLUTION TO THE PROBLEM

### TECHNICAL SOLUTION

Compared with the prior art, the present disclosure provides a hair-cutting roller brush with a reusable drive structure, including a roller brush frame, a blade, and a rotating cylinder; the blade being arranged in the rotating cylinder, and while the rotating cylinder rotates, the rotating cylinder simultaneously drives the blade to reciprocate to cut hair through the drive structure; the roller brush frame having a first side and a second side; wherein a part or all of the drive structure is arranged on the second side, and a sleeve hole is defined in the other end of the rotating cylinder being in axial sleeving connection with the part of the drive structure arranged on the second side; the axial sleeving connection is used to allow the other end of the rotating cylinder to be mounted on the second side along an axial direction; meanwhile one end of the rotating cylinder moves to be mounted on the first side along the axial direction with the axial sleeving connection; when the rotating cylinder is disassembled, the part of the drive structure arranged on the second side remains on the second side, and the rotating cylinder is disassembled in a direction opposite to a direction of the axial sleeving connection.

As an improvement, the drive structure includes a gear transmission structure and a reciprocating motion structure, and the part of the drive structure arranged on the second side forms the gear transmission structure, the reciprocating motion structure is arranged in the rotating cylinder body, and the reciprocating motion structure is installable and detachable along with the rotating cylinder, and the gear transmission structure and the reciprocating motion structure are detachably connected with each other; the gear transmission structure is used to drive the reciprocating motion structure to reciprocate, and the reciprocating motion structure reciprocates to drive the blade to reciprocate.

As an improvement, the second side includes an input end connected to the rotating cylinder and/or the gear transmission structure; when the input end is connected to the rotating cylinder, the input end is used to drive the rotating cylinder to rotate, and the rotating cylinder rotates to drive the gear transmission structure to rotate, which in turn drives the reciprocating motion structure to reciprocate; when the input end is connected to the gear transmission structure, the input end is used to drive the gear transmission structure to rotate, and the gear transmission structures rotates to drive the rotating cylinder to rotate and the reciprocating motion structure to reciprocate; when the input end is connected to both the rotating cylinder and the rotating cylinder, the input end is used to drive both the rotating cylinder and the gear transmission structure to rotate, and the gear transmission structure rotates to drive the reciprocating motion structure to reciprocate

As an improvement, the input end includes a first driving shaft, the first driving shaft is sleeved with a fixing portion, the first driving shaft is rotatable around the fixing portion, and the gear transmission structure is mounted on the fixing portion.

As an improvement, the first driving shaft includes a rotating connection part connected to the gear transmission structure and used to drive the gear transmission structure to rotate, and the gear transmission structure drives the rotating cylinder to rotate.

As an improvement, the gear transmission structure is a planetary gear transmission mechanism, and the fixing portion is arranged on the second side; a sun gear of the planetary gear transmission mechanism is fixedly connected to the fixing portion, a gear ring of the planetary gear transmission mechanism is connected to the rotating cylinder, and a planet carrier of the planetary gear transmission mechanism acts as a transmission output and drives the reciprocating motion structure to move.

As an improvement, the gear ring includes a right end cap connected to the rotating connection part, and the rotating connection part drives the gear ring to rotate through the right end cap, and the gear ring drives the rotating cylinder to rotate.

As an improvement, the gear transmission structure includes an axial connection member at one end thereof adjacent to the reciprocating motion structure, and the gear ring is axially detachably connected to the rotating cylinder through the axial connection member, and after the gear ring is axially detachably connected to the rotating cylinder, the axial connection member simultaneously acts as a circumferential transmission connection member for the rotating cylinder to drive the gear ring to rotate together.

As an improvement, the reciprocating motion structure includes a rotating body, a track is formed in a circumference of the rotating body, and the track engages with a driving member connected to the blade.

As an improvement, the rotating body is connected to a second driving shaft, which is axially reciprocally sleeved in the rotating body and is in circumferential transmission connection with the rotating body, and two elastic members are respectively arranged on two ends of the rotating body to elastically support the rotating body.

As an improvement, the track adopts a guide groove that spirals along the axial direction on a circumferential surface of the rotating body, and both ends of the driving member respectively includes a ball, and the driving member and the guide groove are in rolling engagement through the ball.

As an improvement, the reciprocating motion structure is arranged in an independent compartment.

### ADVANTAGEOUS EFFECTS OF INVENTION

Compared with the prior art, by adopting the above technical solution, the present disclosure has the following advantages: a part or all of the drive structure is arranged on the second side, the other end of the rotating cylinder forms the sleeve hole being in axial sleeving connection with the part of the drive structure arranged on the second side, and the axial sleeving connection allows the other end of the rotating cylinder to be mounted axially on the second side. At the same time, one end of the rotating cylinder moves to be mounted on the first side along the axial direction with the axial sleeving connection. When the rotating cylinder is disassembled, the part of the drive structure arranged on the second side remains on the second side, and the rotating cylinder is disassembled in a direction opposite to the direction of the axial sleeving connection. Therefore, when the hair-cutting roller brush is replaced, only the rotating cylinder and the structure mounted thereon need to be replaced, and the drive structure can be reused, which reduces the usage cost of the hair-cutting roller brush.

In addition, it is very difficult to generate a speed difference at the same end, and the structure is also very complex. Therefore, with the present disclosure, the fundamental structure that generates the speed difference has been changed, which ingeniously brings a new technological route.

Compared with the prior art, the present disclosure provides a cleaning device having a suction port provided with the hair-cutting roller brush.

After adopting the above structure, compared with the prior art, the cleaning device using the hair-cutting roller brush of the present disclosure has lower operating costs.

### BRIEF DESCRIPTION OF DRAWINGS

FIG. 1 is a three-dimensional schematic view of a cleaning device from a top view.
FIG. 2 is a three-dimensional schematic view of the cleaning device from a bottom view.
FIG. 3 is a three-dimensional disassembled view of a rotating cylinder along an axial direction.
FIG. 4 is an enlarged view of a part A in FIG. 3.
FIG. 5 is a three-dimensional schematic view of a side cover on a second side.
FIG. 6 is a three-dimensional schematic view mainly showing a driving connection state.
FIG. 7 is a half-sectional view of a hair-cutting roller brush along an axial direction.
FIG. 8 is a three-dimensional schematic view showing a reciprocating motion structure.

### DESCRIPTION OF REFERENCE NUMERALS

1, blade; 2, rotating cylinder; 3, blade head; 4, fixing portion; 5, sun gear; 6, gear ring; 7, planet carrier; 8, rotating body; 9, track; 10, driving member; 11, first driving shaft; 12, second driving shaft; 13, elastic member; 14, gasket; 15, ball; 16, first bearing; 17, second bearing; 18, rotating engaging sleeve; 19, sealing ring; 20, compartment; 21, lock catch; 22, first driving wheel; 23, driving belt; 24, second driving wheel; 25, first side; 26, second side; 27, rotating connection shaft; 28, third bearing; 29, fourth bearing; 30, rotating connection part; 31, left end cap; 32, right end cap; 33, axial connection member; 34, side cover; 35, first coupling part; 36, second coupling part; 37, insertion fixing hole; 38, socket; 39, handle; and 40, electric motor assembly.

### DESCRIPTION OF EMBODIMENTS

It should be noted that "hair-cutting" is an abbreviation, and it does not only refer to cutting hair. Of course, cutting hair is the main thing, but objects that can be cut are also included in the "hair-cutting" mentioned.

The present disclosure provides a cleaning device having a suction port, and the suction port is provided with a hair-cutting roller brush.

The cleaning device can be a suction head of a vacuum cleaner, a sweeper, and a floor scrubber. The cleaning device in the present disclosure generally refers to a household or a small cleaning device, which also is a feature of the hair-cutting roller brush of the present disclosure. An overall structural size of the cleaning device is well controlled and can be applied to small cleaning devices.

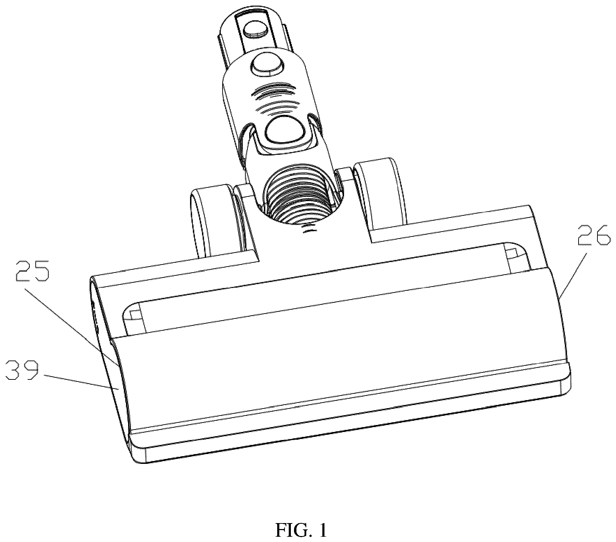

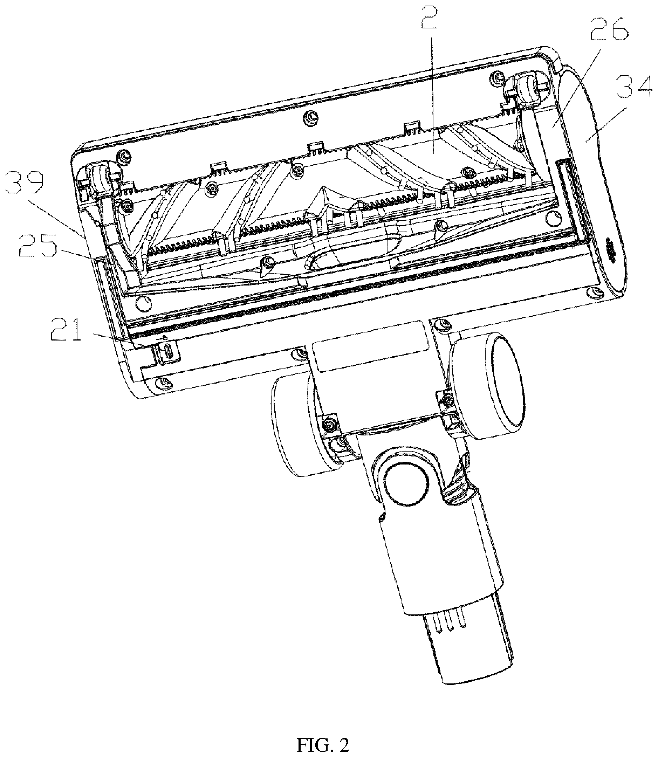

As shown in FIGS. 1 and 2, the cleaning device, namely, the suction head of a vacuum cleaner, includes a roller brush frame. The roller brush frame has a first side 25 and a second side 26. In order to allow the hair-cutting roller brush of the present disclosure to work, the second side 26 includes a first driving wheel 22, a driving belt 23, and a second driving wheel 24. The first driving wheel 22 is driven by an electric motor assembly 40, and the first driving wheel 22 drives the second driving wheel 24 to rotate through the driving belt 23. The second driving wheel 24 is connected to a first driving shaft 11, and a second bearing 17 is arranged between the first driving shaft 11 and the second side 26 to support the rotation of the first driving shaft 11. The first driving shaft 11 is sleeved with a fixing portion 4, and a right end of the fixing portion 4 is fixedly inserted into an insertion fixing hole 37 defined in a side cover 34 of the second side 26. A left end of the fixing portion 4 extends inward to allow for installation of a gear transmission structure.

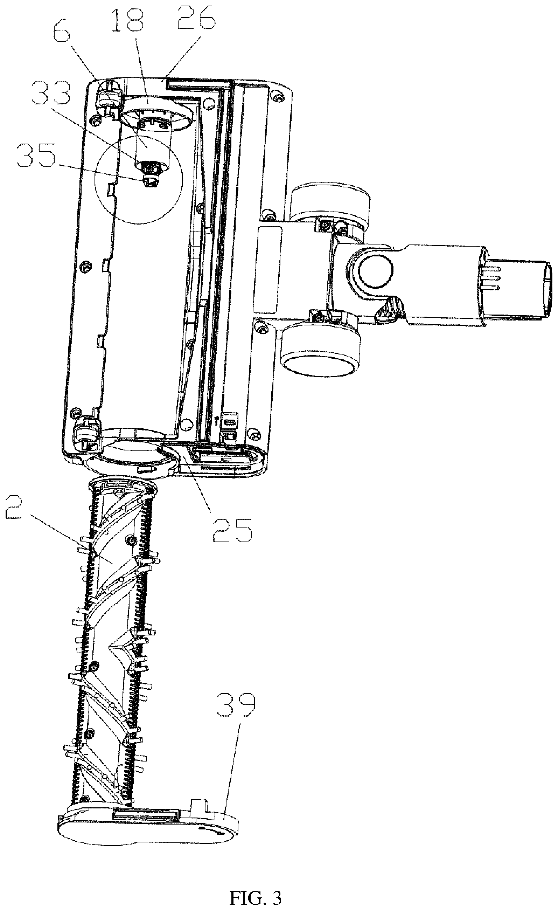

When the roller brush of the present disclosure is assembled, a rotating cylinder 2 is axially aligned with the gear transmission structure and is in axial sleeving connection with the gear transmission structure. The other end of the rotating cylinder 2 is mounted on the second side 26 through the axial sleeving connection between the rotating cylinder 2 and the gear transmission structure. At the same time, one end of the rotating cylinder 2 moves to be mounted to the first side 25 along an axial direction with the axial sleeving connection. When the rotating cylinder 2 is disassembled, the gear transmission structure remains on the second side 26, and the rotating cylinder 2 is axially disassembled in a direction opposite to a direction of the axial sleeving connection, as shown in FIG. 3. In order to ensure reliable connection and facilitate disassembly and assembly, a handle 39 is arranged on one end of the rotating cylinder 2, and a locking structure is arranged between the handle 39 and the roller brush frame. The locking structure can be in various forms. In this embodiment, as shown in FIG. 2, a lock catch 21 is used. When the rotating cylinder 2 is disassembled, firstly the lock catch 21 is unlocked to separate the lock catch 21 from a socket 38 formed on the handle 39, and then the rotating cylinder 2 is axially disassembled. A part of the drive structure, that is, the gear transmission structure remains on the second side. Conversely, the rotating cylinder 2 can be axially sleeved on the gear transmission structure, while the rotating cylinder 2 is mounted between the first side 25 and the second side 26. Then, the lock catch 21 is activated to insert a tongue thereof into the socket 38, thereby completing the locking of the rotating cylinder 2.

The disassembly and assembly of the above structure is simple and reliable, and the disassembly and assembly are convenient without using tools.

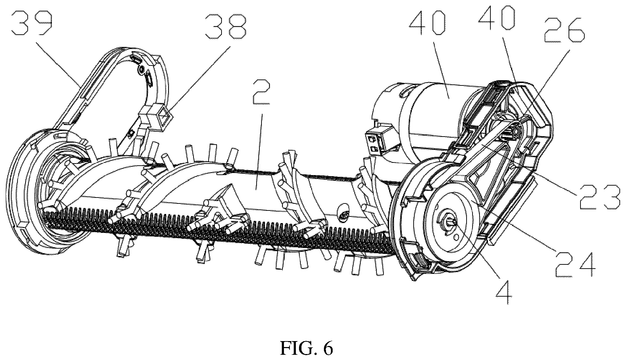

As shown in FIGS. 2, 3, 6 and 7, the hair-cutting roller brush includes a blade 1 and the rotating cylinder 2. The blade 1 includes a blade head 3, and the blade 1 is arranged inside the rotating cylinder 2. When the rotating cylinder 2 rotates, the drive structure simultaneously drives the blade 1 to reciprocate and cut hair. A part or all of the drive structure is arranged on the second side 26, and a sleeve hole is defined in the other end of the rotating cylinder 2 being in axial sleeving connection the part of the drive structure arranged on the second side 26. The axial sleeving connection allows the other end of the rotating cylinder 2 to be axially mounted on the second side 26. At the same time, one end of the rotating cylinder 2 moves to be mounted on the first side along the axial direction with the axial sleeving connection. When the rotating cylinder 2 is disassembled, the part of the drive structure arranged on the second side 26 remains on the second side 26, and the rotating cylinder 2 is disassembled in the direction opposite to of the axial sleeving connection.

The drive structure is mainly used to convert a rotation of an input end to a reciprocation of the blade 1. Any suitable movable structure can be applied in the present disclosure.

In the embodiment, the drive structure includes a planetary gear transmission mechanism and a reciprocating motion structure. The part of the drive structure arranged on the second side 26 refers to the planetary gear transmission mechanism, while the reciprocating motion structure is located inside the rotating cylinder 2. The reciprocating motion structure is installable and detachable along with the rotating cylinder 2, and the planetary gear transmission mechanism is detachably connected to the reciprocating motion structure. The planetary gear transmission mechanism is used to drive the reciprocating motion structure to reciprocate, and the reciprocating motion structure reciprocates to drive the blade 1 to reciprocate. Thus, the structure is simplified, achieving the purpose of the present disclosure, and reducing the complexity and difficulty of setting up the drive structure. In addition, in the aforementioned configuration, a change in a reciprocating speed is mainly caused by the gear transmission mechanism, which simplifies the structure of the hair-cutting roller brush. Furthermore, the reciprocating speed can be controlled more precisely, which facilitates obtaining a better hair-cutting effect.

In some embodiments, an input end is arranged on the second side 26, and the input end is connected to the rotating cylinder 2 and/or the gear transmission structure. When the input end is connected to the rotating cylinder 2, the input end is used to drive the rotating cylinder 2 to rotate, and the rotating cylinder 2 rotates to drive the gear transmission structure to rotate, which in turn drives the reciprocating motion structure to reciprocate. When the input end is connected to the gear transmission structure, the input end is used to drive the gear transmission structure to rotate, which then drives the rotating cylinder 2 to rotate and the reciprocating motion structure to reciprocate. When the input end is connected to both the rotating cylinder 2 and the gear transmission structure, the input end is used to drive both the rotating cylinder 2 and the gear transmission structure to rotate together, and the gear transmission structure rotates to drive the reciprocating motion structure to reciprocate. Such a design is beneficial for providing a compact structure of the roller brush.

In this embodiment, the input end is connected to the gear transmission structure and is used to drive the gear transmission structure to rotate, which then drives the rotating cylinder 2 to rotate and the reciprocating motion structure to reciprocate. Such a design is beneficial for providing a compact structure and thus controls the structural size of the roller brush.

The input end includes a first driving shaft 11 sleeved on the fixing portion 4. The first driving shaft 11 is rotatable around the fixing portion 4, and the fixing portion 4 is mounted to the gear transmission structure. Such a design is beneficial for providing a more compact structure and thus effectively controls the overall size of the entire structure of the roller brush.

The first driving shaft 11 includes a rotating connection part 30, which is connected to the gear transmission structure. The rotating connection part 30 is used to drive the gear transmission structure to rotate, which in turn drives the rotating cylinder 2 to rotate. Such a design is beneficial for providing s a more compact structure and thus effectively controls the overall size of the entire structure of the roller brush.

In this embodiment, the gear transmission structure adopts the planetary gear transmission mechanism, and the second side 26 is provided with the fixing portion 4. A sun gear 5 of the planetary gear transmission mechanism is fixedly connected to the fixing portion 4, and a gear ring 6 of the planetary gear transmission mechanism is connected to the rotating cylinder 2. A planet carrier 7 of the planetary gear transmission mechanism acts as a transmission output and drives the reciprocating motion structure to move. Such a design is beneficial for providing a more compact structure and thus effectively controls the overall size of the entire structure of the roller brush.

In addition, the gear ring 6 includes a right end cap connected to the rotating connection part 30. The rotating connection part 30 drives the gear ring 6 to rotate through the right end cap, and the gear ring 6 then drives the rotating cylinder 2 to rotate. Such a design is beneficial for providing a more compact structure and thus more effectively controls the overall size of the entire structure of the roller brush.

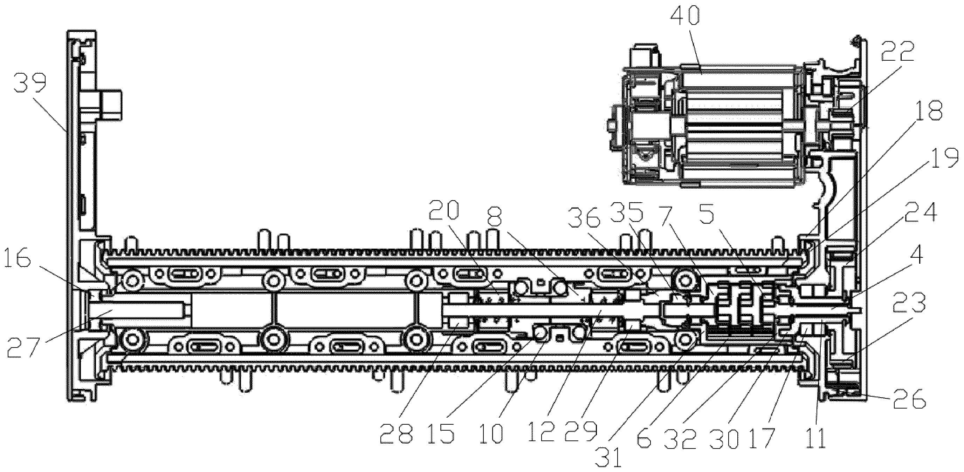

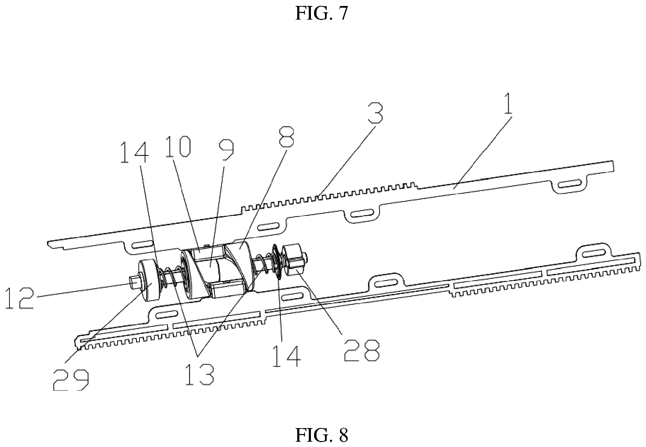

As shown in FIG. 7, after the hair-cutting roller brush is installed between the first side 25 and the second side 26, the fixing portion 4, the gear transmission structure, and the reciprocating motion structure are sequentially arranged along the axial direction of the rotating cylinder 2 from right to left, which can control a lateral structural size of the roller brush.

In this embodiment, the fixing portion 4 is shaped as a shaft, and the gear transmission structure includes three planetary carriers 7 arranged in parallel with each other, three sun gears 5 and three sets of planetary gears. As shown in FIG. 7, the fixing portion 4 is connected to the sun gear 5 at a right end of the gear transmission structure, and is output through the planetary carrier 7 at a left end of the gear transmission structure.

In this embodiment, the planet carrier 7 at the left end of the gear transmission structure is connected to an output shaft. A first coupling part 35 is connected to the output shaft and a second coupling part 36 part is connected to a second driving shaft 12 of the reciprocating motion structure. The first coupling part 35 is axially detachably connected to the second coupling part 36 and is in circumferential transmission connection with the second coupling part 36, which allows the gear transmission structure to be axially detachably connected to the reciprocating motion structure and in circumferential transmission connection with the reciprocating motion structure. The structure is simple and reliable and is easy to connect. The structure of the coupling is not limited to the embodiment, any applicable coupling structure can be applied to the technical solution of the present disclosure.

In this embodiment, the gear ring 6 is axially detachably sleeved in the rotating cylinder 2 and is in circumferential transmission connection with the rotating cylinder 2. A left end cap 31 is arranged on a left end of the gear ring 6, and a right end cap 32 is arranged on a right end of the gear ring 6. The left end cap 31, the gear ring 6, and the right end cap 32 enclose a cavity, in which the planetary gear, the planet carrier 7, and the sun gear 5 are arranged. Such a structure can protect the planetary gear, the planet carrier 7, and the sun gear 5, facilitate a compact structure of the hair-cutting roller brush, and form the modular structure described below.

In this embodiment, the left end cap 31 and the right end cap 32 respectively include a bearing, the bearing of the right end cap 32 is connected to the fixing portion 4, and the bearing of the left end cap 31 is connected to the output shaft. An insertion part of the fixing portion 4 is connected to the sun gear 5, such that the rotating cylinder 2 can rotate relative to the fixing portion 4, that is, the other end of the rotating cylinder 2 can rotate relative to the second side 26, while the sun gear 5 remains fixed. The structure is compact and the overall size of the structure of the hair-cutting roller brush can be controlled.

In this embodiment, the structure of one end of the rotating cylinder 2 which rotates relative to the first side 25 includes a first bearing 16 arranged on the end of the rotating cylinder 2 and a rotating connection shaft 27. The first bearing 16 is arranged on the handle 39, and the rotating connection shaft 27 is connected to the first bearing 16. The first bearing 16 rotatably supports the rotating connection shaft 27, and the rotating connection shaft 27 is also connected to the rotating cylinder 2. In this way, the end of the rotating cylinder 2 may achieve the structure which rotates relative to the first side 25 by being rotatably connected to the first bearing 16 through the rotating connection shaft 27.

As shown in FIG. 7 and FIG. 8, the reciprocating motion structure includes a rotating body 8. A track 9 is formed on a circumference of the rotating body 8. The track 9 engages with a driving member 10 which is connected to the blade 1. Such a design ensures a simple structure and reliable reciprocating motion.

The track 9 adopts a guide groove that spirals along the axial direction on a circumferential surface of the rotating body 8. Both ends of the driving member 10 respectively include at least one ball 15, and the driving member 10 and the guide groove are in rolling engagement through the ball 15. Such a design can control the lateral size and also reduce the friction of motion to facilitate the reciprocating motion. Other anti-friction structures can also be used, which will not be discussed here.

In addition, the rotating body 8 is connected to a second driving shaft 12. The rotating body 8 is axially reciprocally sleeved on the second driving shaft 12 and is in circumferential transmission connection with the second driving shaft 12. The two ends of the rotating body 8 respectively include an elastic member 13 to elastically support the rotating body 8, which is an important anti-sticking design for the blade 1. According to the above design, when the blade 1 cannot move due to unexpected circumstances, the rotating body 8 can move axially along the second driving shaft 12, while the rotating cylinder 2 can still rotate. In this way, on the one hand, such a design can protect the blade 1, the rotating body 8, the gear transmission structure, the rotating cylinder 2 and other related structures, and on the other hand, such a design can adjust the cutting force of the blade 1 by selecting different elastic members 13 or elastic members with variable elasticity. Furthermore, this design provides a technical solution that can easily adjust the cutting force, which is of great significance.

In this embodiment, a structure for achieving both axial reciprocal sleeving connection and circumferential transmission connection is used to facilitate the production and assembly of the roller brush, for example, an axial groove is formed in the rotating body 8 and an axial protrusion is arranged on a circumference of the right part, and the axial protrusion can be sleeved in the axial groove and engage with the axial groove.

In order to facilitate the installation of the elastic member 13, the elastic member 13 adopts a compression spring. Two gaskets 14 are respectively arranged on two ends of the right part, which include a left gasket and a right gasket. A compression spring is arranged between the left gasket and a left side of the rotating body 8, and another compression spring is arranged between the right gasket and a right side of the rotating body 8. With this configuration, the connection is reliable. In addition, the elastic member 13 can be used in another way, that is, a compression degree of the compression spring can be changed by adjusting a position of the gasket 14, thereby changing a cutting power of the blade 1. Furthermore, the elastic member 13 can also improve the universality of parts and components of the hair-cutting roller brush, without preparing too many types of compression springs.

The output shaft is inserted into the cavity through the left end cap 31 and is connected to the planet carrier 7.

Through the above configuration, a relatively-independent assembly can be obtained, which includes the output shaft, the left end cap 31, the planetary gear transmission mechanism, the right end cap 32, and the fixing portion 4. That is, the aforementioned components can be assembled into an assembly which then can be connected to other structures of the hair-cutting roller brush, which greatly facilitates production and assembly of the hair-butting roller brush. In addition, the production quality is high, allowing the roller brush to have a stable production quality.

In this embodiment, the reciprocating motion structure is arranged in the independent compartment 20, which can protect the reciprocating motion structure. In addition, a third bearing 28 and a fourth bearing 29 can be respectively located in a left partition and a right partition of the compartment 20. The third bearing 28 and the fourth bearing 29 can rotatably support the second driving shaft 12. Therefore, the structure is compact, and the left and right partitions also provide a certain degree of strength for the compartment 20, allowing the structure of the rotating cylinder 2 to be more stable.

In order to achieve better anti-hair curling performance, a sealing ring 19 is arranged between the second side 26 and the rotating cylinder 2. In this embodiment, the second side 26 includes a rotating engaging sleeve 18, and the sealing ring 19 is arranged between a circumferential wall of the other end (i.e., the right end) of the rotating cylinder 2 and the rotating engaging sleeve 18. The sealing ring 19 rotates with the rotating cylinder 2. The sealing ring 19 can be, for example, an oil seal.

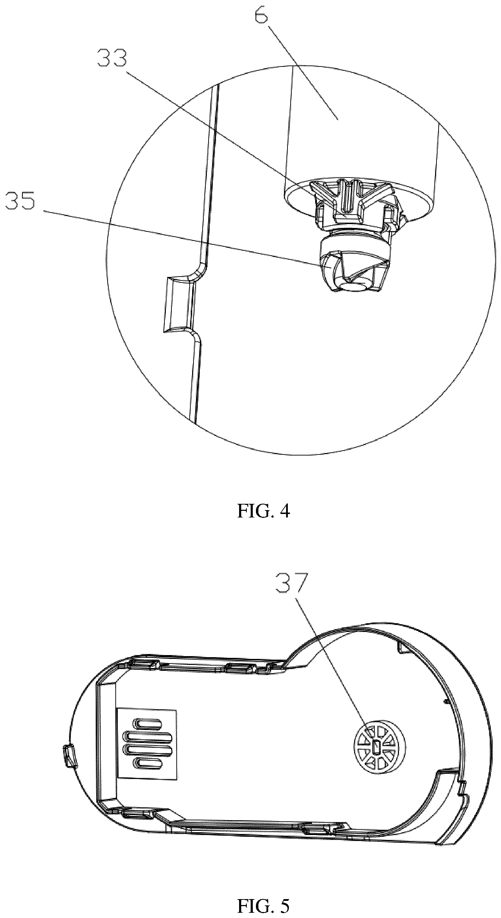

In order to facilitate the axial detachable connection and the subsequent circumferential transmission connection between the gear transmission structure and the rotating cylinder 2, while effectively controlling the lateral size, as shown in FIGS. 3 and 4, the end of the gear transmission structure adjacent to the reciprocating motion structure includes an axial connection member 33. The gear ring 6 is axially detachably connected to the rotating cylinder 2 through the axial connection member 33. In this way, the axial connection member 33 simultaneously serves as a circumferential transmission connection member for the rotating cylinder 2 to drive the gear ring 6 to rotate together. The number of the axial connection member 33 is two, and the two axial connection members 33 are evenly circumferentially distributed along the end of the gear transmission structure adjacent to the reciprocating motion structure.

When understanding the present disclosure, if necessary, the above structure can be understood together with other embodiments/drawings, and will not be elaborated here.

The above descriptions are only an exemplary embodiment of the present disclosure. Therefore, any equivalent changes or modifications made based on the structure, features, and principles described in the scope of protection of the present disclosure are included in the scope of protection of the present disclosure.

The above descriptions are only exemplary embodiments of the present disclosure. Therefore, any equivalent changes or modifications made based on the structure, features, and principles described in the scope of protection of the present disclosure are included in the scope of protection of the present disclosure.

## Claims

1. A hair-cutting roller brush with a reusable drive structure, comprising a roller brush frame, a blade, and a rotating cylinder; the blade being arranged in the rotating cylinder, and while the rotating cylinder rotates, the rotating cylinder simultaneously drives the blade to reciprocate to cut hair through the drive structure; the roller brush frame having a first side and a second side; wherein a part or all of the drive structure is arranged on the second side, and a sleeve hole is defined in the other end of the rotating cylinder being in axial sleeving connection with the part of the drive structure arranged on the second side; the axial sleeving connection is used to allow the other end of the rotating cylinder to be mounted on the second side along an axial direction; meanwhile one end of the rotating cylinder moves to be mounted on the first side along the axial direction with the axial sleeving connection; when the rotating cylinder is disassembled, the part of the drive structure arranged on the second side remains on the second side, and the rotating cylinder is disassembled in a direction opposite to a direction of the axial sleeving connection.

2. The hair-cutting roller brush with a reusable drive structure according to claim 1, wherein the drive structure comprises a gear transmission structure and a reciprocating motion structure, and the part of the drive structure arranged on the second side forms the gear transmission structure, the reciprocating motion structure is arranged in the rotating cylinder body, and the reciprocating motion structure is installable and detachable along with the rotating cylinder, and the gear transmission structure and the reciprocating motion structure are detachably connected with each other; the gear transmission structure is used to drive the reciprocating motion structure to reciprocate, and the reciprocating motion structure reciprocates to drive the blade to reciprocate.

3. The hair-cutting roller brush with a reusable drive structure according to claim 2, wherein the second side comprises an input end connected to the rotating cylinder and/or the gear transmission structure; when the input end is connected to the rotating cylinder, the input end is used to drive the rotating cylinder to rotate, and the rotating cylinder rotates to drive the gear transmission structure to rotate, which in turn drives the reciprocating motion structure to reciprocate; when the input end is connected to the gear transmission structure, the input end is used to drive the gear transmission structure to rotate, and the gear transmission structures rotates to drive the rotating cylinder to rotate and the reciprocating motion structure to reciprocate; when the input end is connected to both the rotating cylinder and the rotating cylinder, the input end is used to drive both the rotating cylinder and the gear transmission structure to rotate, and the gear transmission structure rotates to drive the reciprocating motion structure to reciprocate.

4. The hair-cutting roller brush with a reusable drive structure according to claim 3, wherein the input end comprises a first driving shaft, the first driving shaft is sleeved with a fixing portion, the first driving shaft is rotatable around the fixing portion, and the gear transmission structure is mounted on the fixing portion.

5. The hair-cutting roller brush with a reusable drive structure according to claim 4, wherein the first driving shaft comprises a rotating connection part connected to the gear transmission structure and used to drive the gear transmission structure to rotate, and the gear transmission structure drives the rotating cylinder to rotate.

6. The hair-cutting roller brush with a reusable drive structure according to claim 3 or 4 or 5, wherein the gear transmission structure is a planetary gear transmission mechanism, and the fixing portion is arranged on the second side; a sun gear of the planetary gear transmission mechanism is fixedly connected to the fixing portion, a gear ring of the planetary gear transmission mechanism is connected to the rotating cylinder, and a planet carrier of the planetary gear transmission mechanism acts as a transmission output and drives the reciprocating motion structure to move.

7. The hair-cutting roller brush with a reusable drive structure according to claim 6, wherein the gear ring comprises a right end cap connected to the rotating connection part, and the rotating connection part drives the gear ring to rotate through the right end cap, and the gear ring drives the rotating cylinder to rotate.

8. The hair-cutting roller brush with a reusable drive structure according to claim 6, wherein the gear transmission structure comprises an axial connection member at one end thereof adjacent to the reciprocating motion structure, and the gear ring is axially detachably connected to the rotating cylinder through the axial connection member, and after the gear ring is axially detachably connected to the rotating cylinder, the axial connection member simultaneously acts as a circumferential transmission connection member for the rotating cylinder to drive the gear ring to rotate together.

9. The hair-cutting roller brush with a reusable drive structure according to claim 2 or 3, wherein the reciprocating motion structure comprises a rotating body, a track is formed in a circumference of the rotating body, and the track engages with a driving member connected to the blade.

10. The hair-cutting roller brush with a reusable drive structure according to claim 9, wherein the rotating body is connected to a second driving shaft, which is axially reciprocally sleeved in the rotating body and is in circumferential transmission connection with the rotating body, and two elastic members are respectively arranged on two ends of the rotating body to elastically support the rotating body.

11. The hair-cutting roller brush with a reusable drive structure according to claim 10, wherein the track adopts a guide groove that spirals along the axial direction on a circumferential surface of the rotating body, and both ends of the driving member respectively comprises a ball, and the driving member and the guide groove are in rolling engagement through the ball.

12. The hair-cutting roller brush with a reusable drive structure according to claim 2 or 3, wherein the reciprocating motion structure is arranged in an independent compartment.

13. A cleaning device using the hair-cutting roller brush with a reusable drive structure of any one of claims 1 to 12, the cleaning device having a suction port, wherein the hair-cutting roller brush with a reusable drive structure is provided at the suction port.
